## Europäisches Patentamt

(19)

## European Patent Office

## Office européen des brevets

(11) Veröffentlichungsnummer: **0 216 181**
**B1**

(12)

# EUROPÄISCHE PATENTSCHRIFT

(45) Veröffentlichungstag der Patentschrift:
**18.10.89**

(21) Anmeldenummer: **86111854.5**

(22) Anmeldetag: **27.08.86**

(51) Int. Cl.⁴: **B 01 D 13/00**

(54) **Pervaporationsverfahren.**

(30) Priorität: **06.09.85 DE 3531834**

(43) Veröffentlichungstag der Anmeldung:
**01.04.87 Patentblatt 87/14**

(45) Bekanntmachung des Hinweises auf die Patenterteilung:
**18.10.89 Patentblatt 89/42**

(84) Benannte Vertragsstaaten:
**AT FR GB IT NL SE**

(56) Entgegenhaltungen:
**DE-A- 3 037 736**
**FR-A- 2 151 696**
**FR-A- 2 268 813**
**GB-A- 2 064 346**
**US-A- 2 985 588**
**US-A- 3 540 986**

**PATENTS ABSTRACTS OF JAPAN, Band 9, Nr. 82**
**(C-275)[1805], 11. April 1985; & JP-A-59 216 605 (KURI**
**KAGAK SOUCHI K.K.) 06-12-1984**

(73) Patentinhaber: **Starcosa GmbH, Am Alten Bahnhof 5,**
**D-3300 Braunschweig (DE)**

(72) Erfinder: **Storkebaum, Christoph, Wilhelmitorwall 33a,**
**D-3300 Braunschweig (DE)**
Erfinder: **Tegtmeier, Uwe, Dr., Eichenweg 5,**
**D-3341 Wittmar (DE)**

(74) Vertreter: **Döring, Rudolf, Dr.-Ing., Patentanwälte**
**Dr.-Ing. R. Döring Dipl.-Phys. Dr. J. Fricke Jasperallee 1a,**
**D-3300 Braunschweig (DE)**

ACTORUM AG

## Beschreibung

Die Erfindung betrifft ein Pervaporationsverfahren, bei dem die Suspension einer Lösungsdiffusionsmembran zugeführt und durch Erzeugung eines Unterdruckes auf der Permeatseite das Permeat verdampft und vor Überführung in einen Permeatsammelbehälter in den flüssigen Zustand kondensiert wird.

Es sind Verfahren der eingangs beschriebenen Art bekannt, bei denen die Rohflüssigkeit der Zulauf- bzw. Retentatseite mit einem Überdruck zugeleitet und auf der Permeatseite mit Hilfe einer Vakuumpumpe ein Unterdruck erzeugt wird, um ein Permeat zu gewinnen, welches mit der leichter in der Membran in Lösung gehenden bzw. leichter durch die Membran hindurchdiffundierenden Komponente der Rohflüssigkeit angereichert ist. Zur Kondensation des verdampften Permeats ist es erforderlich, diesem die Verdampfungsenthalpie durch Kühlung zu entziehen, um es als Flüssigkeit in den Permeatsammelbehalter zu überführen.

Die Gesamtdruckdifferenz zwischen der Zulauf- bzw. Retentatseite und der Permeatseite ist dabei abhängig von der Art und Zusammensetzung der Rohflüssigkeit, von der Art des Permeats und des zur Verdampfung des Permeats notwendigen Unterdruckes sowie von den Daten der Membran. Dabei ist ein hinreichendes Druckgefälle zwischen der zuströmenden Rohflüssigkeit und dem Retentataustritt erforderlich, welches durch Umwandlung in Strömungsenergie zu einer hinreichend intensiven Durchströmung des Retentatraumes führt.

Für die Kondensation des in Dampfform anfallenden Permeats ist ein sehr erheblicher Energieaufwand erforderlich, da das Permeat relativ stark gekühlt werden muß, um dessen Kondensation bei dem herrschenden starken Unterdruck auf dem Wege in den Permeatsammelbehälter zu erzielen.

Der Erfindung liegt die Aufgabe zugrunde, ein Verfahren der einleitend genannten Art so weiterzubilden, daß der Energieaufwand für die Verdampfung und Kondensation des Permeats vermindert wird und darüber hinaus günstige Bedingungen für die Erzielung und Aufrechterhaltung eines sterilen Verfahrensablaufes geschaffen werden.

Zur Lösung vorstehender Aufgabe kennzeichnet sich das einleitend genannte Verfahren erfindungsgemäß dadurch, daß das aus der Membran austretende Permeat der Saugwirkung einer Strahlpumpe ausgesetzt und im Treibstrahl der Strahlpumpe kondensiert, in eine Kreislaufströmung überführt sowie innerhalb der Kreislaufströmung als Treibmittel der Strahlpumpe zugeleitet wird.

Durch die Strahlpumpe wird auf einfache Weise und ohne mechanisch bewegte Teile das für die Trennung der Suspension notwendige Druckgefälle sowie der für die Verdampfung des Permeats erforderliche Unterdruck erzeugt, wobei die Strahlpumpe gleichzeitig auch für die Kondensierung des verdampften Permeats in ihrem Treibstrahl sorgt, so daß die Überführung des Permeats in den dampfförmigen Zustand und seine Kondensation in die flüssige Phase im Zuge des Förderweges des Permeats ohne äußere Einwirkung erfolgt. Die Kondensation des verdampften Permeats vollzieht sich in der Kreislaufströmung des bereits zuvor in den flüssigen Zustand überführten Permeats, so daß eine sterile Prozeßführung ermöglicht bzw. sehr erleichtert wird.

Zwar wird auch für die Erzeugung des Unterdruckes auf die Permeatseite und die Kondensation des verdampften Permeats Energie benötigt, jedoch wird gegenüber dem bekannten Verfahren eine erhebliche Energieeinsparung erzielt und gleichzeitig die Möglichkeit einer teilweisen Rückgewinnung der aufgewandten Energie geschaffen.

Die für die Verdampfung des Permeats notwendige Verdampfungswärme wird im wesentlichen dem Retentat entzogen, während die Kondensationswärme zur Überführung des verdampften Permeats in den flüssigen Zustand dem Treibstrahl der Strahlpumpe zugeführt wird. Zur Abführung dieser Wärme kann das Permeat während der Kreislaufströmung gekühlt werden, wobei diese Kühlung im Zuge der Kreislaufströmung zweckmäßig durch Wärmetausch mit der zur Lösungsdiffusionsmembran zugeführten Rohflüssigkeit erfolgt. Hierdurch wird der Rohflüssigkeit die dem Retentat entzogene Wärme zumindest teilweise wieder zugeführt und hierdurch gleichzeitig eine Vorwärmung der Rohflüssigkeit erreicht, welche sich günstig auf den angestrebten Verdampfungsvorgang für das Permeat auswirkt.

Das beschriebene Verfahren ist beispielsweise besonders geeignet für die Gewinnung von Ethanol aus einer wäßrigen Lösung, für die Meerwasserentsalzung oder auch für die Trennung von Öl-Wasser-Emulsionen.

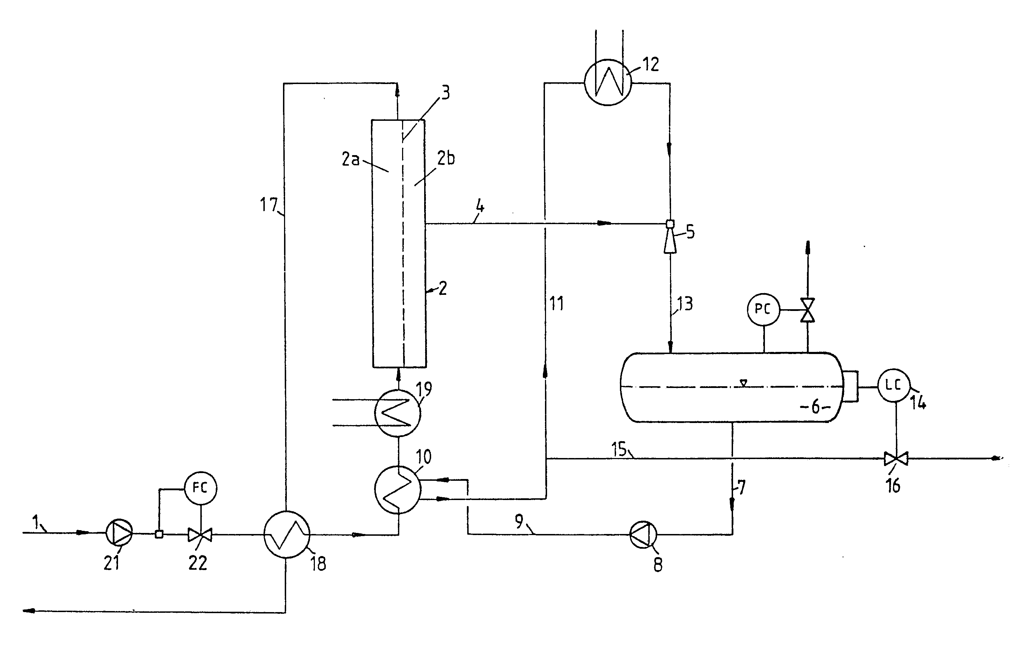

Die Zeichnung gibt ein Ausführungsbeispiel für die Durchführung des Pervaporationsverfahrens wieder.

In der Zeichnung ist mit 1 die Zuführungleitung für die Rohflüssigkeit zu einer insgesamt mit 2 bezeichneten Membranfilteranordnung bezeichnet. Im Zuge der Zuführungsleitung 1 sind eine Förderpumpe 21 und ein Strömungsregelventil 22 vorgesehen. Die Membranfilteranordnung 2 ist durch eine Lösungsdiffusionsmembran 3 in einen Retentatraum 2a und einen Permeatraum 2b unterteilt. Die Zuführungsleitung 1 für die Suspension mündet in den Retentatraum 2a aus.

Von dem Permeatraum 2b erstreckt sich die Permeatabführungsleitung 4, welche mit einer Strahlpumpe 5 verbunden ist. Die Strahlpumpe 5 ist im Zuge einer nachstehend näher beschriebenen Kreislaufleitung für das Permeat angeordnet.

Die genannte Kreislaufleitung erstreckt sich mit einem Abschnitt 7 von der Unterseite eines Permeatsammelbehälters 6 zu einer Förderpumpe 8. Die von der Förderpumpe ausgehende Druckleitung 9 führt zu einem Wärmetauscher 10, welcher in der Zuleitung 1 für die Rohflüssigkeit angeordnet ist. Von dem Wärmetauscher 10 führt die Kreislaufleitung über einen weiteren Leitungsabschnitt 11 durch eine ebenfalls als Wärmetauscher ausgebildete Kühleinrichtung 12 zur Eintrittsseite der Strahlpumpe 5 und von dort aus über den Leitungsabschnitt 13 in den Permeatsammelbehälter.

Von dem Leitungsabschnitt 11 der Kreislaufleitung geht eine Permeatabführungsleitung 15 aus, in der ein Ventil 16 vorgesehen ist, welches über eine

Niveausteuerungseinrichtung 14 in Abhängigkeit von dem Flüssigkeitsspiegel in dem Permeatsammelbehälter 6 betätigt wird.

Zur Abführung des Retentats aus dem Retentatraum 2a dient eine Retentatabführungsleitung 17, die durch einen Wärmetauscher 18 hindurchgeführt ist, der andererseits im Zuge der Zuführungsleitung 1 für die Rohflüssigkeit liegt, so daß bei erhöhter Temperatur des Retentats in der Retentatabführungsleitung 17 eine Vorwärmung der Rohflüssigkeit erfolgt.

Im Zuge der Zuführungsleitung 1 für die Rohflüssigkeit ist zusätzlich zu den Wärmetauschern 18 und 10 noch ein weiterer Wärmetauscher 19 erkennbar, welcher unmittelbar vor der Membranfilteranordnung 2 vorgesehen ist.

Die beschriebene Anordnung wird in der Weise betrieben, daß der in der Strahlpumpe 5 erzeugte Unterdruck, welcher sich auf den Permeatraum 2b auswirkt, eine solche Größe erreicht, daß das Permeat verdampft und in dem dampfförmigen Zustand durch die Saugwirkung in die Strahlpumpe 5 gelangt. Die zur Verdampfung notwendige Wärme wird dabei dem im Retentatraum 2a befindlichen Retentat entzogen.

In der Strahlpumpe erfolgt eine Kondensation des verdampften Permeats in den Treibstrahl. Der Treibstrahl besteht dabei aus flüssigem Permeat, welches mittels der Förderpumpe 8 durch die beschriebene Kreislaufleitung und durch die in dieser Leitung vorgesehenen Wärmetauscher gefördert wird.

Durch den Wärmetauscher 10 wird ein Teil der von dem Treibstrahl aufgenommenen Wärme der in die Membranfilteranordnung 2 zufließenden Rohflüssigkeit zugeführt und gleichzeitig hierdurch eine Abkühlung des Permeats erzielt. Die weitere ebenfalls in dem Beispiel als Wärmetauscher ausgebildete Kühleinrichtung 12 unmittelbar vor der Strahlpumpe bewirkt eine zusätzliche Abkühlung des in der Kreislaufleitung geführten Permeats unmittelbar vor Eintritt in die Strahlpumpe, wo das Permeat den Treibstrahl bildet. Durch diese zusätzliche Kühlung kann die Verdampfungstemperatur des Permeats in der Membranfilteranordnung 2 niedrig gehalten werden. Dies führt zu einer schonenden Behandlung des Permeats, die bei empfindlichen Gütern von sehr erheblicher Bedeutung sein kann.

Um mit einem möglichst niedrigen Unterdruck für die Verdampfung des Permeats auszukommen, ist in dem dargestellten Beispiel eine zusätzliche Erwärmung der Rohflüssigkeit in der Zuführungsleitung 1 durch die Anordnung der Wärmetauscher 18 und 19 vorgesehen. Der Wärmetauscher 18 entnimmt dabei die Wärme dem abfließenden Retentat, welches durch die Retentatabführungsleitung 17 fließt, und führt auf diese Weise zu einer Vorwärmung der Rohflüssigkeit, während der Wärmetauscher 19 mit einer in der Zeichnung nicht wiedergegebenen zusätzlichen Wärmequelle verbunden ist.

Nachstehend wird ein Beispiel für die Ethanolgewinnung aus einer wäßrigen Lösung bzw. die starke Anreicherung in der Lösung an Ethanol mit Hilfe der in der Zeichnung wiedergegebenen Vorrichtung kurz beschrieben.

Es wird ausgegangen von einer Lösung, welche 91% Ethanol und 9% Wasser aufweist. Die Temperatur der Lösung soll 20°C betragen. Nach Passieren des Wärmetauschers 18 sowie der Wärmetauscher 10 und 19 beträgt die Temperatur beim Eintritt in die Membranfilteranordnung 2 etwa 90°C. Das aus der Membranfilteranordnung 2 abfließende Retentat wird durch den Wärmeentzug bei der Verdampfung des Permeats auf ca. 65°C abgekühlt und nach Passieren des Wärmetauschers 18 mit etwa 25°C abgeleitet.

Die Strahlpumpe 5 führt in dem Permeatraum 2b der Membranfilteranordnung und in der Permeatüberführungsleitung 4 zu einem Unterdruck von 0,4 bar. Die Temperatur des verdampften Permeats beträgt etwa 65°C.

Durch die in der Strahlpumpe bewirkte Kondensation des Permeats wird das Permeat erwärmt, so daß das in dem Permeatsammelbehälter 6 befindliche flüssige Permeat etwa eine Temperatur von 80°C annimmt. In der Kreislaufströmung des Permeats erfolgt zunächst durch den Wärmetauscher 10 eine Abkühlung auf etwa 65°C und beim Passieren der ebenfalls als Wärmetauscher ausgebildeten Kühleinrichtung 12 eine weitere Abkühlung auf 45°C, mit dem das Permeat als Treibstrahl der Strahlpumpe 5 zugeleitet wird. Bei Verwendung einer hydrophilen Lösungsdiffusionsmembran 3 und dem Betrieb der Anordnung unter Einhaltung der vorgenannten Daten ergibt sich bei einem Massenstrom der Permeatabführung von 1 und einem Massenstrom der zugeführten Lösung von 9,7 ein Massenstrom des Retentats von 8,7. Das über die Leitung 15 aus der Anordnung abgeführte Permeat weist bei diesem Beispiel eine Zusammensetzung auf von 80% Wasser und 20% Ethanol, während das abgeführte Retentat bei einem Massenstrom von 8,7 aus 99,2% Ethanol und nur noch 0,8% Wasser besteht.

Bei dem beschriebenen Beispiel ist keine teilweise Rückführung des Retentats vorgesehen, obgleich diese durchaus möglich ist, und auf diese Weise eine geringere Anwärmung der Lösung bzw. des Gemisches aus der Lösung und dem rückgeführten Retentat notwendig ist und somit die durch den Wärmetauscher 19 zugeführte zusätzliche Energie erheblich vermindert werden kann. Bei einer mehrfachen Rückführung des Retentats ist es möglich, mit einer geringeren Eingangstemperatur der Lösung bzw. der Mischung aus der Lösung und des Retentats in die Membranfilteranordnung 2 zu arbeiten.

**Patentansprüche**

1. Pervaporationsverfahren, bei dem die Rohflüssigkeit einer Lösungsdiffusionsmembran zugeführt und durch Erzeugung eines Unterdruckes auf der Permeatseite das Permeat verdampft und vor Überführung in einen Permeatsammelbehälter in den flüssigen Zustand kondensiert wird, dadurch gekennzeichnet, daß das aus der Membran austretende Permeat der Saugwirkung einer Strahlpumpe ausgesetzt und im Treibstrahl der Strahlpumpe kondensiert, in eine Kreislaufströmung überführt sowie innerhalb der Kreislaufströmung als Treibmittel der Strahlpumpe zugeleitet wird.

2. Verfahren nach Anspruch 1, dadurch gekennzeichnet, daß das Permeat während der Kreislaufströmung gekühlt wird.

3. Verfahren nach Anspruch 2, dadurch gekennzeichnet, das Permeat im Zuge der Kreislaufströmung durch Wärmetausch mit der zur Lösungsdiffusionsmembran zugeführten Rohflüssigkeit gekühlt wird.

## Claims

1. A pervaporisation method in which the crude fluid is conveyed to a solution diffusion membrane, and the permeate is evaporated by generating reduced pressure on the permeate side and is condensed into the liquid state before being transferred to a permeate-collecting container, characterised in that the permeate emerging from the membrane is exposed to the suction action of a jet pump and condensed in the drive jet of the jet pumpe, transferred into a circulatory flow, and conveyed within the circulatory flow as a propellant to the jet pump.

2. A method according to Claim 1, characterised in that the permeate is cooled during the circulatory flow.

3. A method according to Claim 2, characterised in that the permeate is cooled in the course of the circulatory flow by heat exchange with the crude fluid conveyed to the solution diffusion membrane.

## Revendications

1. Procédé de pervaporisation, dans lequel le liquide brut est amené à une membrane de diffusion d'une solution et dans lequel par production d'une dépression du côté du perméat, ce dernier est vaporisé, puis condensé à l'état liquide avant d'être transféré dans un récipient collecteur du perméat, caractérisé en ce que le perméat issu de la membrane est exposé à l'effet d'aspiration d'une pompe à jet, condensé dans le jet d'entraînement de la pompe et transporté, comme courant d'un circuit tout en alimentant, dans ce courant, la pompe à jet comme agent moteur.

2. Procédé selon la revendication 1, caractérisé en ce que le perméat est refroidi au cours de l'écoulement circulatoire.

3. Procédé selon la revendication 2, caractérisé en ce que le perméat est refroidi, dans le trajet du courant du circuit, par échange de chaleur avec le liquide brut arrivant à la membrane de diffusion.